(19) **Europäisches Patentamt**
**European Patent Office**
**Office européen des brevets**

(11) **EP 3 791 939 B1**

(12) **EUROPEAN PATENT SPECIFICATION**

(45) Date of publication and mention
of the grant of the patent:
**06.08.2025 Bulletin 2025/32**

(21) Application number: **19800882.3**

(22) Date of filing: **19.06.2019**

(51) International Patent Classification (IPC):
*A63B 71/06* (2006.01)    *A63F 13/75* (2014.01)
*A63F 13/798* (2014.01)    *G06Q 50/10* (2012.01)

(52) Cooperative Patent Classification (CPC):
**A63F 13/798; A63F 13/75;** A63F 13/71;
A63F 13/795

(86) International application number:
**PCT/IB2019/055140**

(87) International publication number:
**WO 2019/215711 (14.11.2019 Gazette 2019/46)**

(54) **INFORMATION PROCESSING DEVICE AND PROGRAM**

INFORMATIONSVERARBEITUNGSVORRICHTUNG UND -PROGRAMM

DISPOSITIF ET PROGRAMME DE TRAITEMENT D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.03.2021 Bulletin 2021/11**

(73) Proprietors:
• **Kabushiki Kaisha Dartslive D/B/A
Dartslive Co., Ltd.
Tokyo 141-0033 (JP)**
• **Sega Corporation
Tokyo 141-0033 (JP)**

(72) Inventors:
• **SAITO, Hideki
Tokyo 141-0033 (JP)**
• **TAKAHISA, Koichi
Tokyo 141-0033 (JP)**

(74) Representative: **Yip, Matthew Wing Yu et al
Maucher Jenkins
Seventh Floor Offices
Artillery House
11-19 Artillery Row
London SW1P 1RT (GB)**

(56) References cited:
WO-A1-2013/085206    JP-A- 2001 321 570
JP-A- 2009 160 117    JP-A- 2011 217 762

## Description

## Technical Field

**The** present invention relates to an information processing device and a program.

## Background Art

In recent years, in competition games, an ability value indicating the proficiency of a player is calculated according to records of the player. For example, Patent Publication JP-A-2011-217763 discloses a matching server that calculates the rating indicating the level of an ability of a player based on the records in the past games of the player.

**The** ability value of each player calculated in this manner is used, for example, in a handicap system in which, when a plurality of players compete each other, a given score is provided to a player having a lower ability value in advance.

JP 2011217762 A discusses a matching program allowing players equally matched in ability to play, to match more appropriately, and a matching server and a game system. WO 2013/085206 A1 discusses an online sport game providing method for providing rating and prediction information, and a system therefor.

## Summary

## Technical Problem

However, a game event in which a plurality of players compete each other sequentially to determine the ranks among the plurality of players is sometimes performed. However, the presence of a player who lowers his or her rating lower than his or her actual ability by repeatedly playing with less effort deliberately, and in this state, participates in a game event in which many players participate to and obtain handicap unfairly in the game event has been a problem.

Therefore, an object of the present invention is to provide an information processing device capable of preventing a player from participating in a game event while lowering his or her rating deliberately. Another object of the present invention is to provide an information processing device capable of quickly correcting an ability value of a player who participates in a game event while lowering his or her rating deliberately to an ability value which reflects his or her valid proficiency during the game event.

## Solution to Problem

In accordance with an aspect of the present invention, there is provided an information processing device as recited by claim 1, and a program as recited by claim 8. Preferred features are set out in the dependent claims.

According to this aspect, the ability value of the player is calculated based on the highly reliable record in a game. Therefore, it is possible to prevent a player from participating in a game event while lowering his or her rating deliberately. Moreover, the ability value of the player participating in a game event while lowering his or her rating can be quickly corrected to an ability value that reflects the valid proficiency during the game event.

## Advantageous Effects of Invention

According to the present invention, it is possible to provide an information processing device capable of preventing a player from participating in a game event while lowering his or her rating deliberately. Moreover, according to the present invention, it is possible to provide an information processing device capable of quickly correcting an ability value of a player who participates in a game event while lowering his or her rating deliberately to an ability value which reflects his or her valid proficiency during the game event.

## Brief Description of Drawings

FIG. 1 is a network configuration diagram illustrating an example of a game system 1 according to a first embodiment of the present invention.

FIG. 2 is a block diagram illustrating a functional configuration of a server 10.

FIG. 3 is a diagram illustrating an example of a record table for managing the records in each game of a particular player.

FIG. 4 is a block diagram illustrating a functional configuration of a game device 20.

FIG. 5 is a flowchart illustrating an example of game progress processing during a game event being held.

FIG. 6 is a flowchart illustrating an example of ability value calculation processing.

## Description of Embodiments

Preferred embodiments of the present invention will be described with reference to the accompanying drawings (in the drawings, those denoted by the same reference numerals have the same or similar configuration).

[First Embodiment]

(1) Configuration

(1-1) Game system 1

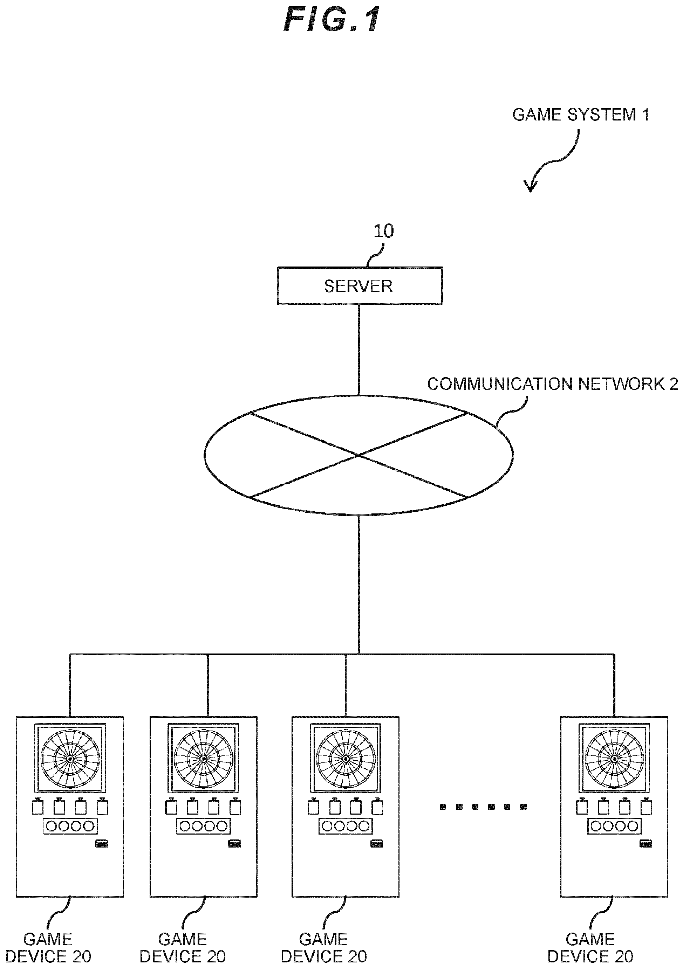

FIG. 1 is a network configuration diagram illustrating an example of a game system 1 according to a first embodiment of the present invention. Hereinafter, a case in which the game system 1 is applied to a dart game will be described as an example. However, the game system 1 can be applied to any other games.

The game system 1 includes a server 10 and a plurality of game devices 20. The game devices 20 are communicably connected to the server 10 via a communication network 2 such as the Internet.

(1-2) Server 10

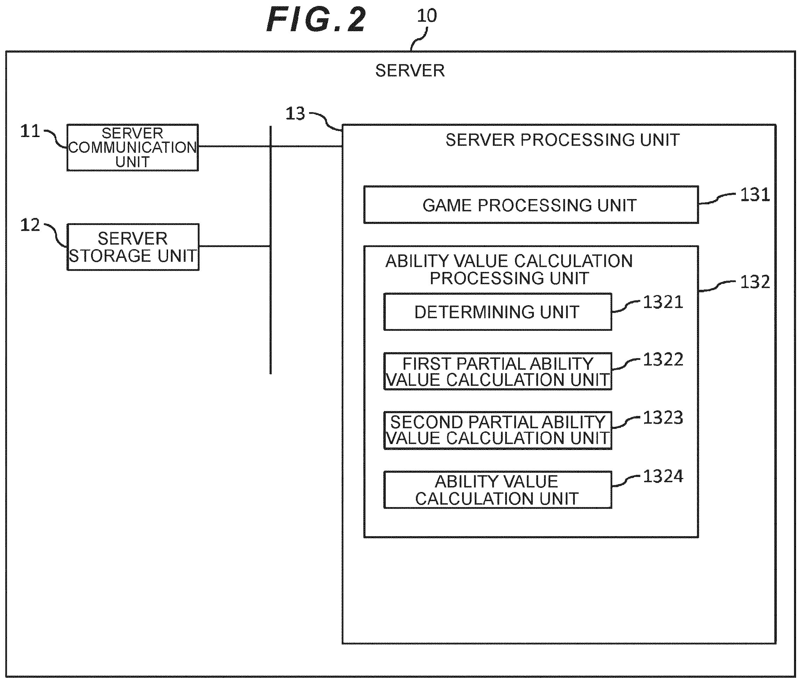

FIG. 2 is a block diagram illustrating a functional configuration of the server 10. The server 10 is an example of an information processing device and includes a server communication unit 11, a server storage unit 12, and a server processing unit 13.

The server communication unit 11 includes a communication interface circuit for connecting the server 10 to the communication network 2 and communicates with the communication network 2. The server communication unit 11 supplies data received from the game device 20 and the like to the server processing unit 13. Moreover, the server communication unit 11 transmits the data supplied from the server processing unit 13 to the game device 20 and the like.

The server storage unit 12 includes at least one of a magnetic tape device, a magnetic disk device, and an optical disc device, for example. The server storage unit 12 stores computer programs (an operating system program, a driver program, and an application program) used for processing in the server processing unit 13, a record table to be described later, and various pieces of data related to processing. For example, the server storage unit 12 stores a game program and the like for playing a dart game as an application program. The game program may be executed by the server 10 and may be executed jointly by the server 10 and the game device 20. The computer program may be installed from a computer-readable portable recording medium such as, for example, a CD-ROM or a DVD-ROM into the server storage unit 12 using a known setup program or the like.

The server processing unit 13 includes one or a plurality of processors and the peripheral circuits thereof. The server processing unit 13 is a CPU, for example, and controls the overall operation of the server 10 in an integrated manner. The server processing unit 13 controls the operation of the server communication unit 11 and the like so that various processes of the server 10 are executed in an appropriate order based on the programs and the like stored in the server storage unit 12. The server processing unit 13 executes the processing based on the programs (an operating system program, a driver program, an application program, and the like) stored in the server storage unit 12.

The server processing unit 13 includes a game processing unit 131 and an ability value calculation processing unit 132. The ability value calculation processing unit 132 includes a determining unit 1321, a first partial ability value calculation unit 1322, a second partial ability value calculation unit 1323, and an ability value calculation unit 1324. These respective units are functional modules realized by programs executed by a processor included in the server processing unit 13. The game processing unit 131 executes the progress of a dart game in an integrated manner as well as executing given reliability confirmation processing related to a player. The ability value calculation processing unit 132 calculates an ability value corresponding to valid proficiency of the player based on the game record of the player.

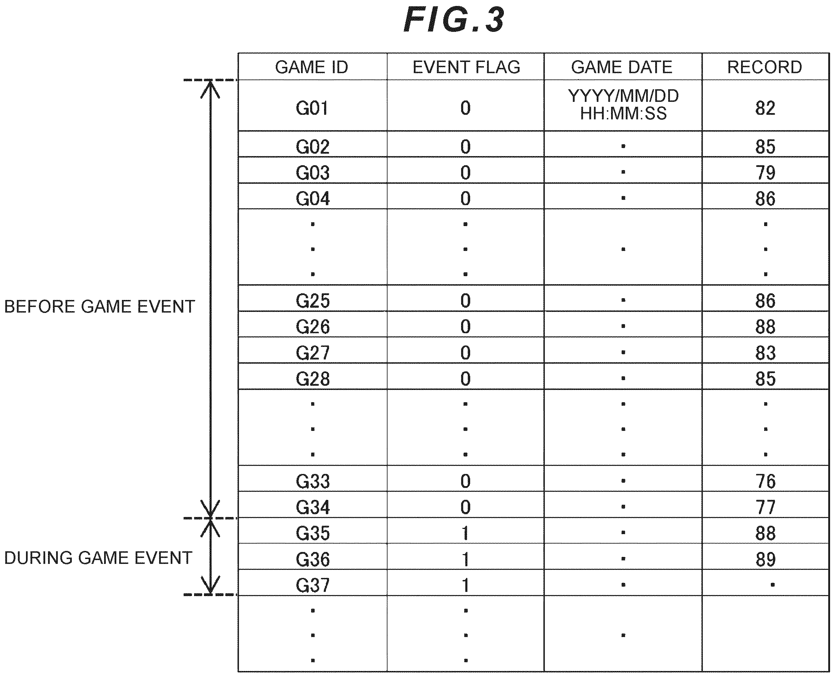

FIG. 3 is a diagram illustrating an example of a record table for managing the records in each game of a particular player. The record table stores pieces of information including a "game ID", an "event flag", a "game date", and a "record" in correlation with each other for each game played by the player. In the example illustrated in FIG. 3, pieces of information related to each game are arranged in chronological order.

The "game ID" is information for identifying a game. The "event flag" is information indicating whether the game is a game (a first game) performed in a state where given reliability confirmation processing is not executed or a game (a second game) performed in a state where the given reliability confirmation processing is executed. Specifically, as illustrated in FIG. 3, an event flag related to a game (for example, a game before a given game event) performed in a state where the reliability confirmation processing is not executed is "0", and an event flag related to a game (for example, a game during a given game event) performed in a state where the reliability confirmation processing is executed is "1". The "game date" is information indicating the data when the game was played. The "record" is information indicting the record in the game of the player. A "record" calculation method may employ any method depending on the type of a game. For example, in the case of dart games, the record may be calculated depending on the results of throwing of darts into sections such as single, double, triple, and bull.

(1-3) Game device 20

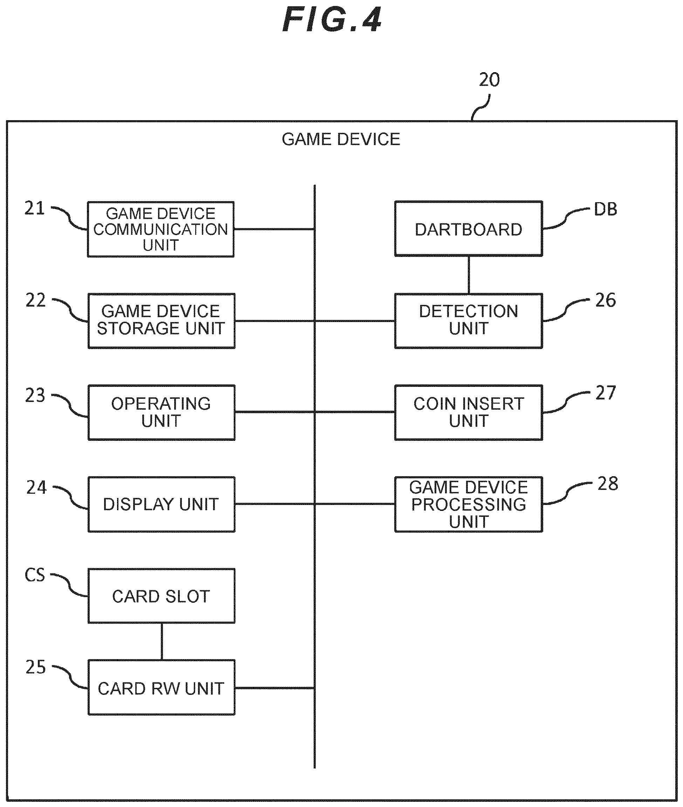

FIG. 4 is a block diagram illustrating a functional configuration of the game device 20. The game device 20 is a game device for allowing a player to play a dart game. The game device 20 includes a game device communication unit 21, a game device storage unit 22, an operating unit 23, a display unit 24, a card slot CS, a card RW unit 25, a dartboard DB, a detection unit 26, a coin insert unit 27, and a game device processing unit 28.

The game device communication unit 21 includes a communication interface circuit for connecting the game device 20 to the communication network 2 and communicates with the communication network 2. The game device communication unit 21 supplies data received from the server 10, the other game devices 20 and the like via the communication network 2 to the game device processing unit 28. Moreover, the game device communication unit 21 transmits data supplied from the game device processing unit 28 to the server 10, the other game devices 20, and the like via the communication network 2.

The game device storage unit 22 includes at least one of a magnetic tape device, a magnetic disk device, and an optical disc device, for example. The game device storage unit 22 stores an operating system program, a driver program, an application program, data, and the like used for processing in the game device processing unit 28. For example, the game device storage unit 22 stores a program and the like for playing a dart game as an application program. The computer program may be installed from a computer-readable portable recording medium such as, for example, a CD-ROM or a DVD-ROM into the game device storage unit 22 using a known setup program or the like. Alternatively, the computer program may be installed in the game device storage unit 22 by being downloaded from the server 10 or the other information processing device via the communication network 2 or the like.

The operating unit 23 is a unit for allowing a player to perform various operations and is realized by operation buttons and the like provided on an operation panel, for example. The operating unit 23 receives operations of a player and transmits signals corresponding to the operations to the game device processing unit 28 and the like.

The display unit 24 may be any device as long as it can display videos, images, and the like, and is a liquid crystal display, an organic electro-luminescence (EL) display, or the like, for example. The display unit 24 may be integrated with the operating unit 23 as a liquid-crystal touch panel display, for example. The display unit 24 displays images and videos corresponding to the data supplied from the game device processing unit 28.

The card slot CS is an insertion slot for inserting a game card possessed by a player. Four card slots CS are provided in the game device 20 so that a maximum of four players can play the game. More than four card slots CS may be provided so that more than four players can play the game.

The card RW unit 25 can read a card ID and the like recorded in the game card possessed by a player and can write information and the like obtained as the game result in the game card.

The dartboard DB is a board serving as the target of a dart game. The dartboard DB is segmented into a plurality of target areas and a number of fine holes are formed in each of the target areas. The tip of the dart thrown by a player is received in any one of a number of holes formed in the target area.

The detection unit 26 includes a membrane switch provided to correspond to each of the target areas to detect the dart stuck in the target area and a vibration sensor provided to detect the thrown dart deviating the target area. The detection unit 26 detects where in the target area the dart is stuck or not based on the signals of the membrane switch and the vibration sensor and transmits a detection signal to the game device processing unit 28.

The coin insert unit 27 includes an insertion slot into which a coin is inserted and a sensor that detects the coin inserted through the insertion slot. In the game device 20, a player can play the game by inserting a given number of coins through the coin insertion slot. The game device 20 may be configured such that the game can be played without inserting any coin through the coin insertion slot.

The game device processing unit 28 includes a plurality of processors and the peripheral circuits thereof. The game device processing unit 28 is a CPU, for example, and controls the overall operation of the game device 20 in an integrated manner. The game device processing unit 28 controls the operation of the game device communication unit 21 and the like so that various processes of the game device 20 are executed in an appropriate order based on the programs and the like stored in the game device storage unit 22.

(2) Operation of game system 1

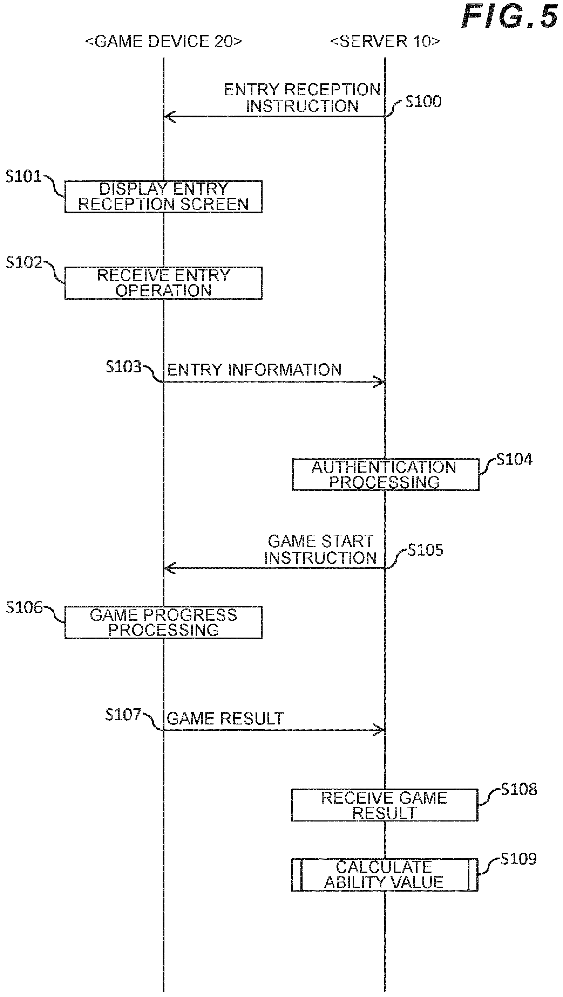

FIG. 5 is a flowchart illustrating an example of game progress processing during a game event being held. Hereinafter, a case in which a plurality of players serving as competition counterparts plays a dart game commonly using one game device 20 will be described as an example. However, the flowchart can be similarly applied to a case where respective players play the dart game using individual game devices 20.

(Step S100)

First, the game processing unit 131 of the server 10 transmits an entry reception instruction to a given game device 20. Here, the entry reception processing includes screen data and the like for displaying an entry reception screen on the display unit 24 of the game device 20.

(Step S101)

Subsequently, upon receiving the entry reception processing from the server 10, the game device processing unit 28 of the game device 20 performs various processes necessary for entry reception such as displaying the entry reception screen on the display unit 24. The game device processing unit 28 may read data related to the entry reception screen from the game device storage unit 22 and display the entry reception screen on the display unit 24.

(Step S102)

Subsequently, the game device processing unit 28 of the game device 20 receives entry operations of a plurality of players serving as competition counterparts. Specifically, the entry operation is performed in such a way that each player inserts his or her card into the card slot CS and inputs necessary information using the operating unit 23.

(Step S103)

Subsequently, when all entry operations of a plurality of players serving as competition counterparts are received, the game device processing unit 28 of the game device 20 transmits entry information including information such as a player ID related to each player to the server 10 via the game device communication unit 21. Here, the entry information includes information indicating the game being played during a game event.

(Step S104)

Subsequently, upon receiving the entry information from the game device 20, the game processing unit 131 of the server 10 performs authentication processing on the player based on the entry information. Specifically, the game processing unit 131 performs the authentication processing by determining whether the received player IDs of the players are the competition counterparts of the game scheduled in the game event, for example. In the authentication processing, the game processing unit 131 executes reliability confirmation processing of checking whether the reliability of a player included in the entry information is high based on the above-described information indicating that the game during a game event. Although a method of the reliability confirmation processing is not particularly limited, advance entry information received before a game event is held may be compared with the entry information received in step S103, for example.

(Step S105)

Subsequently, when the authentication processing in step S104 is successful, the game processing unit 131 of the server 10 transmits a game start instruction to the game device 20.

(Step S106)

Upon receiving the game start instruction from the server 10, the game device processing unit 28 of the game device 20 executes dart game progress processing. In the dart game progress processing, the dart game progresses when players throw darts on the dartboard DB of the game device 20 sequentially.

(Step S107)

Subsequently, when the dart game progress processing ends, the game device processing unit 28 of the game device 20 transmits game result information indicating the results of the game to the server 10.

(Step S108)

Subsequently, upon receiving the game result information from the game device 20, the game processing unit 131 of the server 10 stores the game results included in the game result information in the server storage unit 12. In this case, the game processing unit 131 records an event flag depending on whether the game is during a game event and registers the game results in the "record" of the record table stored in the server storage unit 12.

(Step S109)

Subsequently, the ability value calculation processing unit 132 of the server 10 calculates an ability value corresponding to the valid proficiency of each player based on the record table stored in the server storage unit 12 and the game progress processing ends.

(Specific Calculation Example of Ability Value)

(3) Calculation of Ability Value

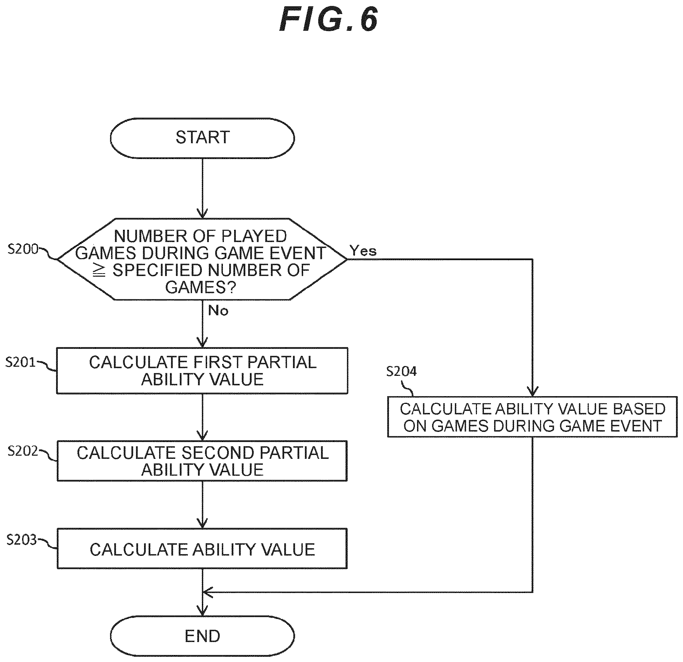

FIG. 6 is a flowchart illustrating an example of ability value calculation processing of step S109. (Step S200)
First, the determining unit 1321 of the ability value calculation processing unit 132 of the server processing unit 13 determines whether the number of games played by the player during the game event is equal to or larger than a given specified number of games T by referring to the record table stored in the server storage unit 12. In this case, for example, the determining unit 1321 counts how many games having the event flag of "1" are consecutive in the latest games registered in the record table and regards the counted number of games as the number of games played during the game event. The given specified number of games T is not particularly limited.

(Step S201)

When the determining unit 1321 determines that the number of games played by the player during the game event is not equal to or larger than the given specified number of games T (is smaller than the given specified number of games T) (step S200: No), a first partial ability value calculation unit 1322 of the ability value calculation processing unit 132 calculates a first partial ability value. Here, the first partial ability value is calculated based on the records of a plurality of games (first games) having the event flag of 0 before the game event was performed as the game played in a state where given reliability confirmation processing is not executed. The number of the plurality of games is not particularly limited. Moreover, the plurality of games may be a plurality of latest games. Furthermore, the first partial ability value may be a weighted average of the records of a plurality of games. In this case, although setting of the weighting coefficients of the records is not particularly limited, all weighting coefficients may be 1 (in the case of simple average), and the weighting coefficient of the record related to a new game may be increased, for example.

(Step S202)

Subsequently, a second partial ability value calculation unit 1323 of the ability value calculation processing unit 132 calculates a second partial ability value. Here, the second partial ability value is calculated based on the records of a plurality of games (second games) during a game event as the games performed in a state where given reliability confirmation processing is executed. The plurality of games is not particularly limited, and may be all games having the event flag of 1 during the game event and may be a plurality of latest games. Moreover, the second partial ability value may be a weighted average of the records of a plurality of games. In this case, although setting of the weighting coefficients of the records is not particularly limited, all weighting coefficients may be 1 (in the case of simple average), and the weighting coefficient of the record related to a new game may be increased, for example.

(Step S203)

Subsequently, the ability value calculation unit 1324 of the ability value calculation processing unit 132 calculates the ability value of the player based on the first partial ability value calculated in step S201 and the second partial ability value calculated in step S202. The ability value may be a weighted average of the first and second partial ability values. For example, when n is the number of games played by the player during the given game event, T is the number of a given specified games, P1 is the first partial ability value, and P2 is the second partial ability value, the ability value P may be calculated as $P = \{(T - n)P1 + nP2\}/T$ (provided that $T \geq n$). According to the method of calculating the ability value P according to this equation, the ability value can be calculated before a game during a game event is performed, and the ability value is calculated with highly reliable data as the game event progresses. Therefore, even when a player lowers his or her rating deliberately before a game event starts, since the ability value approaches the valid proficiency of the player as the game event progresses, it is possible to prevent the player from lowering his or her rating deliberately before a game event starts. Moreover, the ability value of the player participating in a game event while lowering his or her rating can be quickly corrected to an ability value that reflects the valid proficiency during a game event.

(Step S204)

In step S200, when the determining unit 1321 determines that the number of games played by the player during the game event is equal to or larger than the given specified number of games T (step S200: Yes), the ability value calculation unit 1324 calculates the ability value based on the game during the game event. For example, the ability value calculation unit 1324 may calculate the second partial ability value according to the method similar to that of step S203 and regards the second partial ability value as the ability value. Alternatively, the ability value calculation unit 1324 may calculate the ability value based on a game during the game event according to another method. In this way, the ability value calculation processing ends.

As described above, the information processing device according to the first embodiment of the present invention calculates the first partial ability value based on the record in at least one first game performed in a state where given reliability confirmation processing is not executed, calculates the second partial ability value based on the record in at least one second game performed in a state where the given reliability confirmation processing is executed, and calculates the ability value of the player based on the first and second ability values. Therefore, the ability value of the player is calculated based on the highly reliable record in the game. Therefore, it is possible to prevent a player from participating in a game event while lowering his or her rating deliberately. Moreover, the ability value of the player participating in a game event while lowering his or her rating can be quickly corrected to an ability value that reflects the valid proficiency during a game event.

(4) Modification

The ability value P can be calculated by any calculation equation as long as it is based on the first and second partial ability values. For example, the ability value P may be calculated as $P = \min[P1, \{(T - n)P1 + nP2\}/T]$. Here, "min" represents taking the smallest value among a plurality of values in the parentheses. That is, $P = \min[P1, \{(T - n)P1 + nP2\}/T]$ represents taking the smallest value among P1 and $\{(T-n)P1+nP2\}/T$. According to this equation, since the ability value P never falls below the first partial ability value P1, it is possible to prevent the rating from being lowered deliberately even during a game event as well as before the game event.

Specifically, it is possible to prevent an unfair behavior such as playing with less effort deliberately in an early stage of a game event and playing with the actual ability in a final stage of the game event.

The present invention is not limited to the above-described embodiment but can be implemented in various other forms. Therefore, the embodiment is a simple example only in all respects and is not construed as limiting. For example, the above-described processing steps may be executed in any order or in parallel within a range where any inconsistency is created in the processing content. Moreover, another step may be added between the processing steps. Moreover, a step described as one step may be executed in a plurality of divided steps, and steps described as a plurality of divided steps may be grasped as one step.

**Reference Signs List**

| | |
|---|---|
| 1 | Game system |
| 2 | Communication network |
| 10 | Server |
| 11 | Server communication unit |
| 12 | Server storage unit |
| 13 | Server processing unit |
| 131 | Game processing unit |
| 132 | Ability value calculation processing unit |
| 1321 | Determining unit |
| 1322 | First partial ability value calculation unit |
| 1323 | Second partial ability value calculation unit |
| 1324 | Ability value calculation unit |
| 20 | Game device |
| 21 | Game device communication unit |
| 22 | Game device storage unit |
| 23 | Operating unit |
| 24 | Display unit |
| 25 | Card RW unit |
| 26 | Detection unit |
| 27 | Coin insert unit |
| 28 | Game device processing unit |
| CS | Card slot |
| DB | Dartboard |

**Claims**

1. An information processing device (10) for calculating an ability value of a player during a game event corresponding to a valid proficiency of the player, the information processing device comprising:

a storage unit that stores records of the player in individual games;
a reliability authentication processing unit that executes, during the game event, a given reliability confirmation processing for comparing advance entry information of the player received before the game event is held with entry information of the player received during the game event;
a first partial ability value calculation unit (1322) that calculates a first partial ability value based on the records stored in the storage unit in at least one first game performed before the game event;
a second partial ability value calculation unit (1323) that calculates a second partial ability value based on the records in at least one second game performed during the game event; and
a player ability value calculation unit (1324) that calculates the ability value of the player based on the first partial ability value and the second partial ability value.

2. The information processing device according to claim 1, wherein the first partial ability value calculation unit calculates a weighted average of the records in the at least one first game as the first partial ability value.

3. The information processing device according to claim 1 or 2, wherein the second partial ability value calculation unit calculates a weighted average of the records in the at least one second game as the second partial ability value.

4. The information processing device according to any one of claims 1 to 3, wherein the player ability value calculation unit calculates a weighted average of the first partial ability value and the second partial ability value as the ability value.

5. The information processing device according to claim 4, wherein the player ability value calculation unit calculates, as the ability value, a value P represented by an expression:

$$P = \{(T - n)P1 + nP2\}/T,$$

wherein n is a number of times the second game has been played, T is a given specified number of games which is equal to or larger than n, P1 is the first partial ability value, and P2 is the second partial ability value.

6. The information processing device according to claim 4, wherein the player ability value calculation unit calculates, as the ability value, a value P represented by an expression:

$$P = \min[P1, \{(T - n)P1 + nP2\}/T],$$

wherein n is a number of times the second game has been played, T is a given specified number of games which is equal to or larger than n, P1 is the first partial ability value, and P2 is the second partial ability value.

7. The information processing device according to claim 1, wherein the given reliability confirmation processing is executed in a game included in the game event.

8. A program for causing a computer comprising a storage unit that stores records of a player in individual games to function as an information processing device (10) for calculating an ability value of a player during a game event corresponding to a valid proficiency of the player, the information processing device (10) comprising:

   means for executing, during the game event, a given reliability confirmation processing for comparing advance entry information of the player received before the game event is held with entry information of the player received during the game event;
   means for calculating (S201) a first partial ability value based on the records stored in the storage unit in at least one first game performed before a game event;
   means for calculating (S202) a second partial ability value based on the records in at least one second game performed during the game event; and
   means for calculating (S203) an ability value corresponding to valid proficiency of the player based on the first partial ability value and the second partial ability value.

## Patentansprüche

1. Informationsverarbeitungsvorrichtung (10) zum Berechnen eines Fähigkeitswerts eines Spielers während eines Spielereignisses entsprechend einer gültigen Fertigkeit des Spielers, wobei die Informationsverarbeitungsvorrichtung Folgendes umfasst:

   eine Speichereinheit, die Datensätze des Spielers in einzelnen Spielen speichert;
   eine Zuverlässigkeitsauthentifizierungsverarbeitungseinheit, die während des Spielereignisses eine gegebene Zuverlässigkeitsbestätigungsverarbeitung zum Vergleichen von vor dem Spielereignis empfangenen Vorab-Eingabeinformationen des Spielers mit während des Spielereignisses empfangenen Eingabeinformationen des Spielers ausführt;
   eine erste Teilfähigkeitswert-Berechnungseinheit (1322), die einen ersten Teilfähigkeitswert auf der Basis der in der Speichereinheit gespeicherten Datensätze in mindestens einem vor dem Spielereignis durchgeführten ersten Spiel berechnet;
eine zweite Teilfähigkeitswert-Berechnungseinheit (1323), die einen zweiten Teilfähigkeitswert auf der Basis der Datensätze in mindestens einem während des Spielereignisses durchgeführten zweiten Spiel berechnet; und
eine Spielerfähigkeitswert-Berechnungseinheit (1324), die den Fähigkeitswert des Spielers auf der Basis des ersten Teilfähigkeitswerts und des zweiten Teilfähigkeitswerts berechnet.

2. Informationsverarbeitungsvorrichtung nach Anspruch 1, wobei die erste Teilfähigkeitswert-Berechnungseinheit einen gewichteten Durchschnitt der Datensätze in dem mindestens einen ersten Spiel als ersten Teilfähigkeitswert berechnet.

3. Informationsverarbeitungsvorrichtung nach Anspruch 1 oder 2, wobei die zweite Teilfähigkeitswert-Berechnungseinheit einen gewichteten Durchschnitt der Datensätze in dem mindestens einen zweiten Spiel als zweiten Teilfähigkeitswert berechnet.

4. Informationsverarbeitungsvorrichtung nach einem der Ansprüche 1 bis 3, wobei die Spielerfähigkeitswert-Berechnungseinheit einen gewichteten Durchschnitt des ersten Teilfähigkeitswerts und des zweiten Teilfähigkeitswerts als den Fähigkeitswert berechnet.

5. Informationsverarbeitungsvorrichtung nach Anspruch 4, wobei die Spielerfähigkeitswert-Berechnungseinheit als Fähigkeitswert einen Wert P berechnet, dargestellt durch einen Ausdruck:

$$P = \{(T - n)P1 + nP2\}/T,$$

wobei n die Anzahl der gespielten zweiten Spiele ist, T eine gegebene spezifizierte Anzahl von Spielen ist, die gleich oder größer n ist, P1 der erste Teilfähigkeitswert ist und P2 der zweite Teilfähigkeitswert ist.

6. Informationsverarbeitungsvorrichtung nach Anspruch 4, wobei die Spielerfähigkeitswert-Berechnungseinheit als Fähigkeitswert einen Wert P berechnet, dargestellt durch einen Ausdruck:

$$P = \min[P1, \{(T - n)P1 + nP2\}/T],$$

wobei n die Anzahl der gespielten zweiten Spiele ist, T eine gegebene spezifizierte Anzahl von Spielen ist, die gleich oder größer n ist, P1 der erste Teilfähigkeitswert ist und P2 der zweite Teilfähigkeitswert ist.

7. Informationsverarbeitungsvorrichtung nach Anspruch 1, wobei die gegebene Zuverlässigkeitsbestätigungsverarbeitung in einem in dem Spielereignis enthaltenen Spiel ausgeführt wird.

8. Programm zum Veranlassen eines Computers, der eine Speichereinheit umfasst, die Datensätze eines Spielers in einzelnen Spielen speichert, als Informationsverarbeitungsvorrichtung (10) zu fungieren, um einen Fähigkeitswert eines Spielers während eines Spielereignisses entsprechend einer gültigen Fertigkeit des Spielers zu berechnen, wobei die Informationsverarbeitungsvorrichtung (10) Folgendes umfasst:

Mittel zum Ausführen, während des Spielereignisses, einer gegebenen Zuverlässigkeitsbestätigungsverarbeitung, um vor dem Spielereignis empfangene Vorab-Eingabeinformationen des Spielers mit während des Spielereignisses empfangenen Eingabeinformationen des Spielers zu vergleichen;
Mittel zum Berechnen (S201) eines ersten Teilfähigkeitswerts auf der Basis der in der Speichereinheit gespeicherten Datensätze in mindestens einem vor einem Spielereignis durchgeführten ersten Spiel;
Mittel zum Berechnen (S202) eines zweiten Teilfähigkeitswerts auf der Basis der Datensätze in mindestens einem während des Spielereignisses durchgeführten zweiten Spiel; und
Mittel zum Berechnen (S203) eines Fähigkeitswerts entsprechend der gültigen Fertigkeit des Spielers auf der Basis des ersten Teilfähigkeitswerts und des zweiten Teilfähigkeitswerts.

**Revendications**

1. Dispositif de traitement d'informations (10) permettant de calculer une valeur d'aptitude d'un joueur pendant un événement de jeu correspondant à une compétence valide du joueur, le dispositif de traitement d'informations comprenant :

une unité de stockage qui stocke des enregistrements du joueur dans des jeux individuels ;
une unité de traitement d'authentification de fiabilité qui exécute, pendant l'événement de jeu, un traitement de confirmation de fiabilité donné pour comparer des informations de participation préalables du joueur reçues avant la tenue de l'événement de jeu à des informations de participation du joueur reçues pendant l'événement de jeu ;

une unité de calcul de première valeur partielle d'aptitude (1322) qui calcule une première valeur partielle d'aptitude sur la base des enregistrements stockés dans l'unité de stockage dans au moins un premier jeu réalisé avant l'événement de jeu ;
une unité de calcul de seconde valeur partielle d'aptitude (1323) qui calcule une seconde valeur partielle d'aptitude sur la base des enregistrements dans au moins un second jeu réalisé pendant l'événement de jeu ; et
une unité de calcul de valeur d'aptitude de joueur (1324) qui calcule la valeur d'aptitude du joueur sur la base de la première valeur partielle d'aptitude et de la seconde valeur partielle d'aptitude.

2. Dispositif de traitement d'informations selon la revendication 1, l'unité de calcul de première valeur partielle d'aptitude calculant une moyenne pondérée des enregistrements dans l'au moins un premier jeu en tant que première valeur partielle d'aptitude.

3. Dispositif de traitement d'informations selon la revendication 1 ou 2, l'unité de calcul de seconde valeur partielle d'aptitude calculant une moyenne pondérée des enregistrements dans l'au moins un second jeu en tant que seconde valeur partielle d'aptitude.

4. Dispositif de traitement d'informations selon l'une quelconque des revendications 1 à 3, l'unité de calcul de valeur d'aptitude de joueur calculant une moyenne pondérée de la première valeur partielle d'aptitude et de la seconde valeur partielle d'aptitude en tant que valeur d'aptitude.

5. Dispositif de traitement d'informations selon la revendication 4, l'unité de calcul de valeur d'aptitude de joueur calculant, en tant que valeur d'aptitude, une valeur P représentée par une expression :

$$P = \{(T - n)P1 + nP2\}/T,$$

où n est le nombre de fois que le second jeu a été joué, T est un nombre spécifié donné de jeux qui est supérieur ou égal à n, P1 est la première valeur partielle d'aptitude et P2 est la seconde valeur partielle d'aptitude.

6. Dispositif de traitement d'informations selon la revendication 4, l'unité de calcul de valeur d'aptitude de joueur calculant, en tant que valeur d'aptitude, une valeur P représentée par une expression :

$$P = \min[P1, \{(T - n)P1 + nP2\}/T],$$

où n est le nombre de fois que le second jeu a été joué, T est un nombre spécifié donné de jeux qui est supérieur ou égal à n, P1 est la première valeur partielle d'aptitude et P2 est la seconde valeur partielle d'aptitude.

7. Dispositif de traitement d'informations selon la revendication 1, le traitement de confirmation de fiabilité donné étant exécuté dans un jeu compris dans l'événement de jeu.

8. Programme permettant d'amener un ordinateur, comprenant une unité de stockage qui stocke des enregistrements d'un joueur dans des jeux individuels, à fonctionner comme un dispositif de traitement d'informations (10) pour calculer une valeur d'aptitude d'un joueur pendant un événement de jeu correspondant à une compétence valide du joueur, le dispositif de traitement d'informations (10) comprenant :

   un moyen permettant d'exécuter, pendant l'événement de jeu, un traitement de confirmation de fiabilité donné pour comparer des informations de participation préalables du joueur reçues avant la tenue de l'événement de jeu à des informations de participation du joueur reçues pendant l'événement de jeu ;
   un moyen permettant de calculer (S201) une première valeur partielle d'aptitude sur la base des enregistrements stockés dans l'unité de stockage dans au moins un premier jeu réalisé avant un événement de jeu ;
   un moyen permettant de calculer (S202) une seconde valeur partielle d'aptitude sur la base des enregistrements dans au moins un second jeu réalisé pendant l'événement de jeu ; et
   un moyen permettant de calculer (S203) une valeur d'aptitude correspondant à une compétence valide du joueur sur la base de la première valeur partielle d'aptitude et de la seconde valeur partielle d'aptitude.

# FIG.1

GAME SYSTEM 1

10

SERVER

COMMUNICATION NETWORK 2

GAME
DEVICE 20

GAME
DEVICE 20

GAME
DEVICE 20

GAME
DEVICE 20

## FIG.2

**SERVER** (10)

SERVER COMMUNICATION UNIT (11)

SERVER STORAGE UNIT (12)

**SERVER PROCESSING UNIT** (13)

GAME PROCESSING UNIT (131)

ABILITY VALUE CALCULATION PROCESSING UNIT (132)

- DETERMINING UNIT (1321)
- FIRST PARTIAL ABILITY VALUE CALCULATION UNIT (1322)
- SECOND PARTIAL ABILITY VALUE CALCULATION UNIT (1323)
- ABILITY VALUE CALCULATION UNIT (1324)

# FIG.3

| | GAME ID | EVENT FLAG | GAME DATE | RECORD |
|---|---|---|---|---|
| | G01 | 0 | YYYY/MM/DD HH:MM:SS | 82 |
| | G02 | 0 | . | 85 |
| | G03 | 0 | . | 79 |
| | G04 | 0 | . | 86 |
| | . | . | | . |
| BEFORE GAME EVENT | G25 | 0 | . | 86 |
| | G26 | 0 | . | 88 |
| | G27 | 0 | . | 83 |
| | G28 | 0 | . | 85 |
| | . | . | . | . |
| | G33 | 0 | . | 76 |
| | G34 | 0 | . | 77 |
| | G35 | 1 | . | 88 |
| DURING GAME EVENT | G36 | 1 | . | 89 |
| | G37 | 1 | . | . |
| | . | . | . | |

EP 3 791 939 B1

# *FIG.4*

**FIG.5**

```
<GAME DEVICE 20>          <SERVER 10>

                    ENTRY RECEPTION
                      INSTRUCTION      ─S100

S101─  DISPLAY ENTRY
       RECEPTION SCREEN

S102─  RECEIVE ENTRY
       OPERATION

S103─  ENTRY INFORMATION ──────────►

                              AUTHENTICATION    ─S104
                              PROCESSING

                       GAME START
                      INSTRUCTION      ─S105

S106─  GAME PROGRESS
       PROCESSING

S107─  GAME RESULT ──────────────►

                              RECEIVE GAME       ─S108
                              RESULT

                              CALCULATE          ─S109
                              ABILITY VALUE
```

15

# FIG.6

```
                    ┌──────────────────┐
                    │      START       │
                    └──────────────────┘
                              │
                              ▼
                   ╱──────────────────────╲
           S200   ╱  NUMBER OF PLAYED       ╲  Yes
           ──────〈  GAMES DURING GAME EVENT  〉────────────────┐
                  ╲  ≧ SPECIFIED NUMBER OF   ╱                  │
                   ╲       GAMES?          ╱                    │
                    ╲────────────────────╱                     │
                              │ No                             │
                              ▼                                │
           S201  ┌──────────────────────┐                      │
           ──────│ CALCULATE FIRST PARTIAL │                   │
                 │     ABILITY VALUE       │       S204         ▼
                 └──────────────────────┘       ┌───────────────────────────┐
                              │                  │ CALCULATE ABILITY VALUE BASED │
                              ▼                  │  ON GAMES DURING GAME EVENT   │
           S202  ┌──────────────────────┐       └───────────────────────────┘
           ──────│ CALCULATE SECOND PARTIAL │                  │
                 │     ABILITY VALUE       │                   │
                 └──────────────────────┘                      │
                              │                                │
                              ▼                                │
           S203  ┌──────────────────────┐                      │
           ──────│ CALCULATE ABILITY VALUE │                   │
                 └──────────────────────┘                      │
                              │◄──────────────────────────────┘
                              ▼
                    ┌──────────────────┐
                    │       END        │
                    └──────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011217763 A
- JP 2011217762 A

- WO 2013085206 A1